# FASCICULE DE BREVET EUROPEEN

(11) **EP 3 081 599 B1**
(45) Date de publication et mention de la délivrance du brevet: **26.09.2018**
(21) Numéro de dépôt: 16165136.9
(22) Date de dépôt: 13.04.2016
(51) Int. Cl.: C08L 93/00, C08L 95/00, C08L 93/04, C09J 193/04, C09D 193/04, C08L 91/00

(54) **LIANT D'ORIGINE VÉGÉTALE, COMPOSITIONS LE COMPRENANT ET MÉTHODE POUR DIMINUÉR LA QUANTITÉ DE BITUME PÉTROLIER**
PFLANZLICHES BINDEMITTEL, ZUSAMMENSETZUNGEN DAVON UND VERFAHREN ZUR VERRINGERUNG DER MENGE DES ÖL-BASIERENDEN BITUMEN
PLANT-BASED BINDER, COMPOSITIONS THEREOF AND METHOD FOR REDUCING THE AMOUNT OF OIL-BASED BITUMEN

(30) Priorité: 14.04.2015 FR 1553271
(43) Date de publication de la demande: 19.10.2016
(73) Titulaire: SOPREMA, 67100 Strasbourg (FR); Oleon SAS, 60280 Venette (FR)
(72) Inventeur: BINDSCHEDLER, Pierre Etienne, 67000 STRASBOURG (FR); PERRIN, Rémi, 67530 BOERSCH (FR); ROBACH, Christine, 67990 OSTHOFFEN (FR); KERBRAT, Marion, 60280 MARGNY LES COMPIEGNE (FR); CHATILLON, Matthieu, 60200 COMPIEGNE (FR); RAYMOND, Franck, 40260 LINXE (FR)
(74) Mandataire: Cabinet Plasseraud

(56) Documents cités:
- EP-A1- 1 466 878
- EP-A2- 0 304 767
- WO-A1-2009/071653
- FR-A1- 2 995 890
- FR-A1- 2 995 891
- GB-A- 1 011 260
- US-A- 2 362 934
- US-A1- 2010 116 171
- US-A1- 2012 071 597
- US-A1- 2012 302 672

## Description

La présente invention concerne un liant d'origine végétale à base de poix de tall-oil (tallol) modifiée, de résine végétale modifiée et éventuellement d'huile. L'invention concerne également des compositions de membrane d'étanchéité, de membrane insonorisante, de système d'étanchéité liquide, de revêtement en enrobés bitumineux, de revêtement en asphalte, de primaire, de vernis, de mastic, de colle ou d'émulsion de liant qui comprennent ledit liant ainsi qu'une méthode pour diminuer la quantité de bitume d'origine pétrolière dans lesdites compositions.

Le bitume d'origine pétrolière est fréquemment utilisé pour réaliser des membranes d'étanchéités, notamment pour étanchéifier les toitures, ou des revêtements routiers. Il présente en effet des propriétés viscoélastiques et imperméabilisantes intéressantes tout en ayant un prix de revient peu élevé et une bonne stabilité dans le temps.

Une composition bitumineuse classique pour réaliser une membrane d'étanchéité comprend notamment :
- 35 à 87 % de bitume ;
- 3 à 15 % de polymère ;
- 10 à 50 % de charge ;
- 0,1 à 5% d'additifs ;
ladite composition étant appliquée en couche sur un support fibreux, par exemple par enduction puis calandrage, pour conduire à une membrane d'étanchéité préfabriquée pouvant notamment être utilisée pour étanchéifier les toitures.

Une composition classique pour réaliser un revêtement routier comprend notamment :
- 1 à 10 % de bitume ;
- 80 à 98 % de charges ;
ledit bitume pouvant être un bitume modifié, c'est-à-dire un bitume comprenant au moins un polymère. La teneur en polymère dans le bitume modifié est classiquement de 0,5 à 6% en poids de polymère par rapport au poids total du bitume et du polymère.

Le bitume d'origine pétrolière est un mélange d'hydrocarbures obtenu après distillation du pétrole. Ce bitume, sous une forme pâteuse ou solide, est liquéfiable à chaud et adhère fortement aux supports sur lesquels on l'applique. Le pétrole étant une ressource fossile non-renouvelable, il serait souhaitable, dans une optique de développement durable, de remplacer le bitume d'origine pétrolière par un liant d'origine végétale, d'autant plus que la demande mondiale croissante en essence et en produits issus du pétrole a fait baisser la qualité et la disponibilité du bitume d'origine pétrolière.

La demande de brevet US 2012/0041117 de S.A. Imperbel N.V. décrit un liant d'origine naturelle comprenant :
- 14 à 19% en poids d'huile naturelle ;
- 4 à 17% en poids de polymère ;
- 32 à 40% de résine.

La demande de brevet US 2012/0071597 de S.A. Imperbel N.V. décrit un liant d'origine naturelle comprenant :
- 1 à 65% en poids d'une poix de tall-oil brute ;
- 7 à 40% en poids de polymère ;
- une charge.

Les liants de ces deux demandes de brevet peuvent notamment être utilisés pour réaliser des membranes d'étanchéité pour toitures. Cependant, les membranes obtenues avec lesdits liants ne sont pas satisfaisantes car elles présentent des dégradations des propriétés thermomécaniques après vieillissement très importantes. Ces mélanges présentent de plus une prise en eau exagérée.

On connait également, avec la demande de brevet EP 04300190.8 de Colas SA, un liant de nature végétale pour la réalisation de matériaux pour le bâtiment et/ou les travaux publics qui comprend, par rapport au poids total du liant :
(a) 2 à 98% en poids d'au moins une résine naturelle ou naturelle modifiée, d'origine végétale, ayant une température de ramollissement de 30 à 200 °C ;
(b) 98 à 2% en poids d'au moins une huile d'origine végétale ayant une viscosité à 25°C de 50 mPa.s à 1000 Pa.s ;
(c) ledit liant ayant :
   (c1) soit une pénétrabilité à 25°C de 20 à 300 1/10mm et une température de ramollissement de 30 à 75°C;
   (c2) soit une pénétrabilité à 15°C de 300 à 900 1/10 mm et une viscosité à 60°C de 2 à 20Pa.s ; et
(d) ledit liant étant exempt de tout élastomère naturel ou synthétique et de tout polymère thermoplastique.

Cependant, le liant de cette demande n'est pas adapté à la modification par des polymères.

On connait également, avec le brevet US 2,362,934 de Hercules Powder Company, une composition de colle à carrelage comprenant un plastifiant, ledit plastifiant consistant en :
- 60 à 95% en poids d'un plastifiant durcisseur choisi dans le groupe consistant en des huiles sèches gélifiées, des poix brutes dérivées d'huiles végétales ou d'huiles et de graisses animales ;
- 40 à 5% en poids d'un matériau choisi dans le groupe consistant en les esters de colophanes liquides et les esters de colophanes liquides hydrogénés.

Toutefois, le plastifiant de cette demande n'a pas les propriétés d'un bitume

Après de nombreuses recherches, les Demanderesses ont mis au point un liant d'origine végétale pouvant être utilisé en remplacement d'une partie ou de la totalité du bitume d'origine pétrolière dans une composition pour faire des membranes ou des revêtements tels que notamment une membrane d'étanchéité, une membrane insonorisante, un système d'étanchéité liquide, un revêtement en enrobés bitumineux, un revêtement en asphalte, un primaire, un vernis, un mastic, une colle ou une émulsion de liant. Les membranes ou revêtements obtenus avec le liant d'origine végétale de la présente invention présentent des propriétés intéressantes notamment en ce qui concerne l'élasticité, la reprise en eau, la résistance à la traction, l'adhésion et la stabilité au vieillissement.

La présente invention a ainsi pour objet un liant d'origine végétale comprenant :
- 65 à 85%, de préférence 70 à 80%, plus préférentiellement 75%, d'une fraction plastifiante comprenant une poix de tall-oil modifiée ;
- 15 à 35%, de préférence 20 à 30%, plus préférentiellement 25%, d'une fraction structurante comprenant une résine végétale modifiée ;
les % étant des % en poids par rapport au poids du liant.

Un autre objet de l'invention est une composition de membrane d'étanchéité comprenant :
- le liant d'origine végétale de la présente invention ;
- un polymère ;
- une charge ;
- éventuellement un additif.

Un autre objet de l'invention est une composition de membrane insonorisante comprenant :
- le liant d'origine végétale de la présente invention ;
- une charge ;
- éventuellement un polymère ;
- éventuellement un additif.

Un autre objet de l'invention est un système d'étanchéité liquide comprenant :
- le liant d'origine végétale de la présente invention ;
- un solvant ou plastifiant polymérisable ;
- un additif ;
- un prépolymère ;
- éventuellement une charge.

Encore un objet de la présente invention est une composition de revêtement en enrobés bitumineux ou de revêtement en asphalte comprenant :
- le liant d'origine végétale de la présente invention ;
- un polymère ;
- une charge et/ou des granulats ;
- éventuellement un additif.

Un autre objet de la présente invention est une composition de primaire, de vernis, de mastic ou de colle comprenant :
- le liant d'origine végétale selon l'invention ;
- du solvant ;
- un additif ;
- éventuellement un polymère ;
- éventuellement une charge.

Encore un autre objet de la présente invention est une composition d'émulsion de liant comprenant :
- le liant d'origine végétale selon l'invention ;
- un tensioactif ;
- un polymère ;
- de l'eau ;
- éventuellement un additif.

Enfin, l'invention a pour objet une méthode pour diminuer la quantité de bitume d'origine pétrolière dans une composition de membrane d'étanchéité selon l'invention ou dans une composition de membrane insonorisante selon l'invention ou dans une composition de système d'étanchéité liquide selon l'invention ou dans une composition de revêtement en enrobés bitumineux ou de revêtement en asphalte selon l'invention ou dans une composition de primaire, de vernis, de mastic ou de colle selon l'invention ou dans une composition d'émulsion de liant selon l'invention, ladite méthode comprenant l'ajout d'un liant d'origine végétale selon l'invention à ladite composition en remplacement d'une partie ou de la totalité du bitume d'origine pétrolière.

### Liant d'origine végétale

Le liant de la présente invention est d'origine végétale, c'est-à-dire que les composés qu'il contient sont majoritairement obtenus à partir de végétaux, après une ou plusieurs étapes de séparation et/ou de transformation chimique.

Le liant de la présente invention comprend :
- 65 à 85%, de préférence 70 à 80%, plus préférentiellement 75%, d'une fraction plastifiante comprenant une poix de tall-oil modifiée ;
- 15 à 35%, de préférence 20 à 30%, plus préférentiellement 25%, d'une fraction structurante comprenant une résine végétale modifiée ;
les % étant des % en poids par rapport au poids du liant.

La fraction structurante permet d'obtenir des liants résistants à la température et qui adhèrent au support sur lequel ils sont appliqués. La fraction plastifiante permet de compatibiliser les polymères et d'assurer une bonne souplesse à basse température.

### Fraction plastifiante

La fraction plastifiante du liant de la présente invention comprend une poix de tall-oil modifiée.

La poix de tall-oil est un sous-produit issu de la fabrication de pâte à papier par le procédé Kraft. Ainsi, lorsque des copeaux de bois de conifères sont traités par un mélange de soude et de sulfure de sodium à chaud, la lignine et l'hémicellulose se dégradent et se solubilisent dans la liqueur alors que la cellulose peut être récupérée sous forme de pulpe et ensuite lavée. La liqueur, qui contient également des acides sous la forme de carboxylates de sodium, est récupérée et concentrée. La mousse qui se forme à la surface de la liqueur concentrée est récupérée puis acidifiée à chaud avec de l'acide sulfurique pour conduire au brut de tall-oil. Le brut de tall-oil est ensuite distillé à pression réduite et la fraction non-volatile résiduelle est la poix de tall-oil. La poix de tall-oil, référencée sous le n° CAS [8016-81-7], comprend majoritairement des acides gras tels que l'acide palmitique, l'acide linoléique et l'acide oléique ; des esters d'acides gras ; des acides résiniques tels que l'acide abiétique et ses isomères, l'acide pimarique, l'acide isopimarique et l'acide sandaracopimarique ; des esters d'acides résiniques ; des alcools diterpéniques ; des alcools gras et des stérols. La composition de la poix de tall-oil varie selon l'espèce de conifère utilisée et sa provenance. L'acidité de la poix de tall-oil amène de l'hydrophilie pénalisant les propriétés de durabilité et augmentant la prise d'eau des produits dans lesquels elle est introduite. Cette prise d'eau amène une incompatibilité d'utilisation dans des applications pour matériaux durables au contact de l'eau.

Selon un mode de réalisation particulier, la poix de tall-oil modifiée du liant de la présente invention est obtenue par estérification de poix de tall-oil avec un alcool, un polyol ou un mélange de ceux-ci.

Les alcools et/ou polyols utilisés pour modifier la poix de tall-oil peuvent notamment être d'origine végétale.

Des exemples non-limitants d'alcools pouvant être utilisés pour modifier la poix de tall-oil sont les alcools comprenant de 1 à 18 atomes de carbone, tels que notamment le méthanol, l'éthanol, le propanol, le butanol, les alcools terpéniques, les alcools gras tels que l'alcool laurylique, l'alcool myristylique, l'alcool cétylique, l'alcool stéarylique, et leurs mélanges.

Des exemples non-limitants de polyols pouvant être utilisés pour modifier la poix de tall-oil sont les polyols terpéniques, le 1,1,1-triméthylolpropane, le pentaérythritol, l'éthylène glycol, le diéthylène glycol, le triéthylène glycol, le polyéthylène glycol, le glycérol, le dipropylène glycol, le tripropylène glycol, le 1,3-propanediol, le 1,4-butanediol, le 1,5-pentanediol, le 1,6-hexanediol, le néopentyl glycol, et leurs mélanges.

Selon un mode de réalisation particulier, la poix de tall-oil modifiée est une poix de tall-oil estérifiée avec du triéthylène glycol disponible auprès de la société DRT sous la référence Résinoline DP1202.

Selon un autre mode de réalisation, la poix de tall-oil modifiée est une poix de tall-oil estérifiée avec un mélange de terpinéol et de diéthylène glycol disponible auprès de la société DRT sous la référence Résinoline DP1204.

Selon un autre mode de réalisation, la poix de tall-oil modifiée est une poix de tall-oil estérifiée avec du diéthylène glycol disponible auprès de la société DRT sous la référence Résinoline DP1201.

Selon un autre mode de réalisation, la poix de tall-oil modifiée est une poix de tall-oil estérifiée avec un mélange de glycérol et de diéthylène glycol disponible auprès de la société DRT sous la référence Résinoline DP1203.

Selon un autre mode de réalisation particulier, la poix de tall-oil modifiée du liant de la présente invention est obtenue par décarboxylation thermique de poix de tall-oil.

La décarboxylation thermique de poix de tall-oil peut notamment être réalisée à une température de 250 à 450°C, en particulier de 275 à 375°C, plus particulièrement de 300 à 360°C.

Selon un mode de réalisation particulier, la poix de tall-oil modifiée du liant de la présente invention présente une acidité résiduelle inférieure à 40, en particulier inférieure à 30, plus particulièrement inférieure à 20 milligrammes de KOH par gramme de poix de tall-oil modifiée.

Au sens de la présente invention, par « acidité résiduelle » on entend la mesure de l'indice d'acide qui est le nombre de milligrammes d'hydroxyde de potassium nécessaire pour neutraliser l'acidité libre d'un gramme de produit, tel que décrit ici.

Selon un mode de réalisation particulier, la fraction plastifiante du liant de la présente invention peut comprendre, outre la poix de tall-oil modifiée, une huile.

L'huile de la fraction plastifiante peut notamment être une huile d'origine végétale, une huile d'origine animale, et leurs mélanges.

Au sens de la présente invention, par «huile d'origine animale » ou «huile d'origine végétale » on entend les huiles obtenues à partir de végétaux ou d'animaux, soit directement soit après une ou plusieurs étapes de séparation et/ou de transformation chimique.

Des exemples d'huiles végétales pouvant être introduites dans le liant de la présente invention sont l'huile de lin, l'huile de colza, l'huile de tournesol, l'huile de soja, l'huile d'olive, l'huile de palme, l'huile de ricin, l'huile de maïs, l'huile de pépins de raisin, l'huile de jojoba, l'huile de sésame, l'huile de noix, l'huile de noisette, l'huile d'amande, l'huile de karité, l'huile de macadamia, l'huile de coton, l'huile de luzerne, l'huile de coco, l'huile de carthame, l'huile d'arachide et leurs mélanges.

Des exemples d'huiles animales pouvant être introduites dans le liant de la présente invention sont le suif, le saindoux et leurs mélanges.

Selon un autre mode de réalisation particulier, l'huile de la fraction plastifiante peut notamment être choisie parmi les huiles polyesters saturées, les huiles polyesters insaturées, les huiles végétales à haute teneur en acide oléique et leurs mélanges.

Au sens de la présente invention, par « huile polyester saturée », on entend le produit de réaction entre un polyol et deux, trois ou quatre acides carboxyliques saturés.

Au sens de la présente invention, par « huile polyester insaturée », on entend le produit de réaction entre un polyol et deux, trois ou quatre acides carboxyliques insaturés.

Les polyols pouvant être utilisés pour faire des huiles polyesters saturées ou insaturées sont le 1,1,1-triméthylolpropane, le pentaérythritol, l'éthylène glycol, le diéthylène glycol, le triéthylène glycol, le tétraéthylène glycol, le pentaéthylène glycol, l'hexaéthylène glycol, le glycérol, le dipropylène glycol, le tripropylène glycol, 1,3-propanediol, le 1,4-butanediol, le 1,5-pentanediol, le 1,6-hexanediol, le néopentyl glycol, leurs dérivés éthoxylés et/ou propoxylés, c'est-à-dire les polyols cités ci-dessus comprenant en outre des unités -(O-CH₂-CH₂)- et/ou -(-O-CH(CH₃)-CH₂)- entre les fonctions alcools, et leurs mélanges.

Les acides carboxyliques saturés pouvant être utilisés pour faire des huiles polyesters saturées sont les acides carboxyliques linéaires ou ramifiés saturés ayant de 8 à 32 atomes de carbone.

Les acides carboxyliques insaturés pouvant être utilisés pour faire des huiles polyesters insaturées sont les acides carboxyliques linéaires ou ramifiés ayant de 8 à 32 atomes de carbone et 1 à 6 doubles liaisons C=C.

Selon un mode de réalisation préféré, l'huile de la fraction plastifiante du liant de la présente invention est une huile polyester saturée.

Un exemple d'huile polyester saturée est commercialisé sous la référence Radia 7396 par la société OLEON. Un autre exemple d'huile polyester saturée est le triisostéarate de triméthylolpropane commercialisé sous la référence Radia 7380 par la société OLEON.

Selon un mode de réalisation particulier, la fraction plastifiante du liant de la présente ne comprend pas d'huile et consiste essentiellement en de la poix de tall-oil modifiée.

Selon un autre mode de réalisation particulier, la fraction plastifiante du liant de la présente invention comprend :
- de 50 à 80%, en particulier de 55 à 75%, plus particulièrement de 60 à 70%, de poix de tall-oil modifiée;
- de 20 à 50%, en particulier de 25 à 45%, plus particulièrement de 30 à 40%, d'huile ;
les % étant des % en poids par rapport au poids de la fraction plastifiante.

### Fraction structurante

La fraction structurante du liant de la présente invention comprend une résine végétale modifiée.

La résine végétale naturelle est un liquide visqueux qui circule dans les canaux résinogènes se trouvant sur le pourtour d'arbres résineux tels que notamment les arbres du genre *Pinus*. La résine végétale naturelle peut être obtenue par une opération nommée gemmage qui est réalisée en enlevant l'écorce sur une petite partie de l'arbre, en pratiquant une incision dans le bois et en récoltant la résine qui s'écoule.

La résine végétale naturelle comprend des terpènes et des acides résiniques. Des exemples de terpènes pouvant être compris dans la résine végétale naturelle sont des terpènes bicycliques tels que l'alpha-pinène, le beta-pinène et le delta-3-carène; des terpènes monocycliques tels que le limonène et le terpinolène ; des sesquiterpènes tels que le longifolène et le caryophyllène ; et leurs mélanges. Des exemples d'acides résiniques pouvant être compris dans une résine végétale naturelle sont des acides résiniques tels que l'acide abiétique et ses isomères, l'acide pimarique et ses isomères; et leurs mélanges.

Le mélange desdits acides résiniques, également appelé colophane ou rosine, peut être le résidu solide obtenu après distillation de la résine végétale naturelle.

Les principaux constituants de la résine végétale naturelle, c'est-à-dire les terpènes et les acides résiniques peuvent également être obtenus à partir de sous-produits issus de la fabrication de pâte à papier par le procédé Kraft. Ainsi, les terpènes peuvent être obtenus par distillation des essences de papeterie à pression réduite et la colophane par distillation du brut de tall-oil à pression réduite.

Au sens de la présente invention, le terme « résine végétale naturelle » comprend les produits issus du gemmage ou du procédé de fabrication de pâte à papier par le procédé Kraft, qui comprennent des terpènes et/ou des acides résiniques.

Au sens de la présente invention, le terme « résine végétale modifiée » comprend les produits issus de la transformation par réaction chimique de la résine végétale naturelle telle que définie ci-dessus.

Selon un mode de réalisation préféré, la résine végétale modifiée du liant de la présente invention est une résine terpène phénolique ou un ester de colophane fortifiée.

Par « résine terpène phénolique » on entend, au sens de la présente invention, une résine végétale modifiée obtenue par réaction chimique d'un terpène ou d'un mélange de terpènes avec un phénol éventuellement substitué.

Des exemples non-limitants de terpènes sont les terpènes mono-cycliques, les terpènes bicycliques, les terpènes linéaires et les mélanges de ceux-ci ; tels que notamment l'alpha-pinène, le bêta-pinène, le delta-3-carène, le dipentène, le terpinolène, le myrcène, l'alloocimène.

Un exemple de résine terpène phénolique pouvant être introduit dans le liant de la présente invention est disponible auprès de la société DRT sous la référence Dertophène DP1104.

Par « ester de colophane fortifiée » on entend, au sens de la présente invention, une résine végétale modifiée obtenue par réaction d'estérification d'un polyol avec une colophane fortifiée.

Des exemples non-limitants de polyols adaptés pour estérifier la colophane fortifiée sont le pentaérythritol, le 1,1,1-triméthylolpropane, l'éthylène glycol, le diéthylène glycol, le triéthylène glycol, le polyéthylène glycol, le glycérol, le dipropylène glycol, le tripropylène glycol, le 1,3-propanediol, le 1,4-butanediol, le 1,5-pentanediol, le 1,6-hexanediol, le néopentyl glycol, et leurs mélanges.

Un exemple d'ester de colophane fortifiée pouvant être introduit dans le liant de la présente invention est disponible auprès de la société DRT sous la référence Granolite DP 1105.

Par « colophane fortifiée » on entend, au sens de la présente invention, une résine végétale modifiée obtenue par réaction chimique de type Diels-Alder d'une colophane avec un composé α-β insaturé comprenant de un à trois groupes indépendamment choisis parmi acide carboxylique (-COOH) et anhydride d'acide (-C(O)OC(O)-). La colophane fortifiée a ainsi une température de ramollissement plus élevée que la colophane correspondante.

Des exemples non-limitants de composés α-β insaturés comprenant de un à trois groupes indépendamment choisis parmi acide carboxylique (-COOH) et anhydride d'acide (-C(O)OC(O)-) adaptés pour fortifier la colophane sont l'acide acrylique, l'acide méthacrylique, l'acide fumarique, l'acide itaconique, l'acide sorbique, l'acide maléique, ainsi que leurs formes anhydrides.

Selon un mode de réalisation préféré, la résine végétale modifiée du liant de la présente invention présente une température de ramollissement supérieure à 120°C, de préférence supérieure à 130°C, plus préférentiellement supérieure à 135°C. En effet, lorsque la résine présente une température de ramollissement trop faible, le liant résultant n'a pas des propriétés satisfaisantes en termes de température Bille anneau, pénétrabilité à l'aiguille à 25°C et viscosité à 70°C.

La résine végétale modifiée du liant de la présente invention peut notamment présenter une acidité résiduelle inférieure à 80, en particulier inférieure à 60, plus particulièrement inférieure à 40 milligrammes de KOH par gramme de résine végétale modifiée.

Le liant de la présente invention peut présenter des propriétés proches d'un bitume d'origine pétrolière, tel que notamment un bitume appartenant à la classe 35/50 ou 70/100 ou 160/220.

Ainsi, lorsque la fraction plastifiante du liant de la présente invention consiste essentiellement en de la poix de tall-oil modifiée, le liant de la présente invention peut notamment présenter une température de Bille anneau, telle que mesurée selon la méthode décrite ci-après, de 30 à 58°C, en particulier de 35 à 43°C, plus particulièrement de 37 à 40°C.

De plus, lorsque la fraction plastifiante du liant de la présente invention consiste essentiellement en de la poix de tall-oil modifiée, le liant de la présente invention peut notamment présenter une pénétrabilité à l'aiguille à 25°C, telle que mesurée selon la méthode décrite ci-après, de 30 à 300 dixièmes de mm, en particulier de 70 à 210 dixièmes de mm, plus particulièrement de 170 à 200 dixièmes de mm.

Le liant d'origine végétale de la présente invention peut notamment être obtenu en mélangeant la poix de tall-oil modifiée, la résine végétale modifiée et éventuellement l'huile.

### Composition de membrane d'étanchéité

La composition de membrane d'étanchéité selon la présente invention, comprend, outre le liant d'origine végétale décrit ci-dessus, un polymère, une charge et éventuellement un additif.

La composition de membrane d'étanchéité selon la présente invention peut notamment comprendre :
- de 40 à 70%, en particulier de 45 à 65%, plus particulièrement de 50 à 60%, de liant d'origine végétale selon l'invention ;
- de 5 à 25%, en particulier de 8 à 20%, plus particulièrement de 10 à 15%, de polymère ;
- de 15 à 45%, en particulier de 20 à 40%, plus particulièrement de 25 à 35%, de charge ;
- de 0 à 10%, en particulier de 0,1 à 8%, plus particulièrement de 1 à 5%, d'additif ;
les % étant des % en poids par rapport au poids total de la composition de membrane d'étanchéité.

Selon un mode de réalisation particulier, le polymère entrant dans la composition de membrane d'étanchéité de la présente invention est choisi parmi les polyoléfines, les copolymères qui comprennent des motifs éthylène et/ou propylène, les polymères vinyliques, les polymères styréniques, les polyesters, les polyamides, les polyuréthanes, les polymères (méth)acryliques, les copolymères élastomères à blocs, et leurs mélanges.

Des exemples de polyoléfines sont le polyéthylène (PE), le polypropylène (PP), le polypropylène atactique (PPA), le polypropylène isotactique (PPI), le polyisobutylène (PIB), le polyméthylpentène (PMP), les alpha-polyoléfines amorphes (APAO), l'éthylène vinyl acétate (EVA), et leurs mélanges.

Des exemples de copolymères qui comprennent des motifs éthylène et/ou propylène sont l'éthylène vinyl acétate (EVA), les copolymères éthylène-propylène (EP ou EPM) et les terpolymères éthylène-propylène-diène (EPDM), et leurs mélanges.

Des exemples de polymères vinyliques sont le poly(chlorure de vinyle) (PVC), le poly(chlorure de vinyle) surchloré (PVC-C), le poly(acétate de vinyle) (PVAC), le poly(alcool vinylique) (PVAL), et leurs mélanges.

Des exemples de polymères styréniques sont le polystyrène (PS), l'acrylonitrile-butadiène-styrène (ABS), le styrène-butadiène (SBR), le styrène-acrylonitrile (SAN), l'acrylonitrile-styrène-acrylate (ASA), et leurs mélanges.

Des exemples de polyesters sont le poly(acide glycolique) (PGA), le poly(acide lactique) (PLA), le polyhydroxybutyrate (PHB), le poly(3-hydroxyvalerate) (P(3HV)), le poly(3-hydroxyhexanoate) (P(3-HHx)), le polycaprolactone (PCL), le polyéthylène adipate (PEA), le polybutylène succinate (PBS), le poly(téréphtalate d'éthylène) (PET), le poly(téréphtalate de butylène) (PBT), le poly(naphtalate d'éthylène) (PEN), le poly(téréphtalate de triméthylène) (PTT), et leurs mélanges.

Des exemples de polyamides sont le polycaprolactame (PA 6), polylauroamide (PA 12), le polyundécanamide (PA 11), le (polytétraméthylène adipamide) (PA 4.6), le polyhexaméthylène adipamide (PA 6.6), le polyhexaméthylène nonanediamide (PA 6.9), le polyhexaméthylène sébaçamide (PA 6.10), le polyhexaméthylène dodécanediamide (PA 6.12), le polydécaméthylène sébaçamide (PA 10.10), le polydécaméthylène dodécanediamide (PA 10.12), le [NH-(CH₂)₆-NH-CO-(CH₂)₄-CO]ₙ-[NH-(CH₂)₅-CO]ₘ (PA 6.6/6), le [NH-(CH₂)₅-CO]ₙ-[NH-(CH₂)₆-NH-CO-(CH₂)₄-CO]ₘ-[NH-(CH₂)₆-NH-CO-(CH₂) ₈-CO]ₚ (6/6.6/6.10), les polyphtalamides, les aramides, et leurs mélanges.

Des exemples de polymères (méth)acryliques sont le poly(méthacrylate de méthyle) (PMMA), polyacrylonitrile (PAN), et leurs mélanges.

Des exemples de copolymères élastomères à blocs sont le styrène-butadiène (SB), le styrène-butadiène-styrène (SBS), le styrène-éthylène-butadiène-styrène (SEBS), le styrène-isoprène-styrène (SIS), et leurs mélanges.

Des exemples de polyuréthanes sont les produits issus de la réaction entre :
- au moins un polyol tel que notamment un polyol de type polyéther, par exemple un polyéthylène glycol (PEG), un polypropylène glycol (PPG), un triol de glycérine polypropylèneglycol, ou un polytétrahydrofurane (PTHF) ; un polyol de type polyester, par exemple le Priplast® 3196 commercialisé par la société CRODA ou le Krasol® LBH-p 3000 commercialisé par la société CRAYVALLEY ; un polyol de type polycaprolactone, par exemple le PCP 1000 commercialisé par la société SOLVAY ; et leurs mélanges; et
- un composé ayant plus d'une fonction isocyanate, tel que notamment le diphénylméthane diisocyanate (MDI), le MDI polymérique, le toluène diisocyanate (TDI), un trimère de TDI, l'hexaméthylène diisocyanate (HDI), un trimère de HDI, l'isophorone diisocyanate (IPDI), un trimère d'IPDI, et leurs mélanges.

Selon un mode de réalisation préféré, le polymère entrant dans la composition de membrane d'étanchéité de la présente invention est un copolymère élastomère à blocs, de préférence le polymère est choisi parmi SB, SBS, SIS, SEBS et leurs mélanges.

Le polymère entrant dans la composition de membrane d'étanchéité de la présente invention peut notamment présenter une dureté shore A, telle que mesurée selon la norme ASTM D2240, de 70 à 90, en particulier de 75 à 88, plus particulièrement de 80 à 85.

Le polymère entrant dans la composition de membrane d'étanchéité de la présente invention peut notamment présenter un indice de fluidité (Melt Flow Index (MFI)), tel que mesuré selon la norme ASTM D1238, inférieur à 1 g/10min, en particulier inférieur à 0,7 g/10min, plus particulièrement inférieur à 0,5 g/10min.

Le polymère entrant dans la composition de membrane d'étanchéité de la présente invention peut notamment présenter une teneur en polystyrène de 20 à 40%, en particulier de 25 à 35%, plus particulièrement 29 à 32% en poids par rapport au poids du polymère.

Selon un mode de réalisation particulier, la charge entrant dans la composition de membrane d'étanchéité de la présente invention est une charge minérale ou organique telle que notamment le carbonate de calcium, la silice, le talc, la dolomie, le kaolin, le noir de carbone, le dioxyde de titane, et leurs mélanges. De préférence, ladite charge est le carbonate de calcium. Des charges issues de recyclage sont également utilisables (lignine, fibres recyclées, broyats polymères, coke, broyats ciments).

La composition de membrane d'étanchéité de la présente invention peut éventuellement comprendre un additif. Des exemples d'additifs pouvant être ajoutés dans ladite composition selon l'invention sont des agents ignifugeants tels que des borates ou halogénées, des agents anti-racines tels que le Preventol® B5, les agents antioxydants, les agents rhéologiques.

Selon un mode de réalisation particulier, la composition de membrane d'étanchéité de la présente invention comprend moins de 10%, de préférence moins de 5%, plus préférentiellement moins de 1% en poids de bitume d'origine pétrolière par rapport au poids de la composition.

La composition de membrane d'étanchéité de la présente invention peut notamment être réalisée en mélangeant le liant d'origine végétale, le polymère, les additifs et la charge. L'étape de mélange peut notamment être réalisée à une température de 150 à 200°C, en particulier de 160 à 180°C.

La membrane d'étanchéité peut notamment être obtenue en appliquant la composition de membrane d'étanchéité selon l'invention à chaud sur un renfort. La membrane se solidifie lorsque la température redescend à la température ambiante. La température d'application peut notamment être comprise 150 et 200°C, en particulier de 160 à 180°C. La composition de membrane d'étanchéité peut notamment être appliquée en formant une couche ayant une épaisseur de 1 à 10 mm, en particulier de 2 à 6 mm sur le renfort.

### Composition de membrane insonorisante

La composition de membrane insonorisante selon la présente invention, comprend, outre le liant d'origine végétale décrit ci-dessus, une charge, éventuellement un polymère, et éventuellement un additif.

La composition de membrane insonorisante selon la présente invention peut notamment comprendre :
- de 20 à 70%, en particulier de 20 à 50%, plus particulièrement de 30 à 40%, de liant d'origine végétale selon l'invention ;
- de 30 à 80%, en particulier de 50 à 75%, plus particulièrement de 55 à 70%, de charge ;
- de 0 à 10%, en particulier de 2 à 8%, plus particulièrement de 3 à 5%, de polymère ;
- de 0 à 10%, en particulier de 0,1 à 8%, plus particulièrement de 1 à 5%, d'additif ;
les % étant des % en poids par rapport au poids total de la composition de membrane insonorisante.

La charge, le polymère éventuel et l'additif éventuel peuvent notamment être tels que décrits pour la composition de membrane d'étanchéité.

Le procédé de fabrication de la membrane insonorisante est tel que décrit pour la membrane d'étanchéité.

La membrane insonorisant peut notamment être obtenue en appliquant la composition de membrane insonorisante selon l'invention à chaud sur un renfort, tel que décrit pour la membrane d'étanchéité.

### Composition de système d'étanchéité liquide

La composition de système d'étanchéité liquide (SEL) selon la présente invention, comprend, outre le liant d'origine végétale décrit ci-dessus, du solvant ou plastifiant polymérisable, un additif, un prépolymère et éventuellement une charge.

La composition de SEL selon la présente invention peut notamment comprendre :
- de 20 à 60%, en particulier de 25 à 55%, plus particulièrement de 30 à 50% de liant d'origine végétale selon l'invention;
- de 15 à 30%, en particulier de 18 à 28%, plus particulièrement de 20 à 25% de solvant ou plastifiant polymérisable ;
- de 0,1 à 10%, en particulier de 1 à 8%, plus particulièrement de 2 à 5% d'additif;
- de 30 à 50%, en particulier de 32 à 45%, plus particulièrement de 35 à 40% de prépolymère ;
- de 0 à 10%, en particulier de 0,1 à 8%, plus particulièrement de 1 à 5% de charge ;
les % étant des % en poids par rapport au poids total de la composition de SEL.

L'additif et la charge éventuelle peuvent notamment être tels que décrits pour la composition de membrane d'étanchéité.

Le prépolymère peut notamment être un polyuréthane obtenu par réaction d'un polyol ou d'un mélange de polyols ayant un nombre de fonctions OH compris entre 1,5 et 3 avec un polyisocyanate ou un mélange de polyisocyanates ayant un nombre de fonctions NCO compris entre 1,6 et 3 ; le polyol et le polyisocyanate étant tels que définis pour les polyuréthanes ci-dessus.

Le solvant peut notamment être choisi parmi les alcanes, les cycloalcanes, le toluène, le xylène, le benzène, la méthyléthylcétone, le cumène, le mésitylène, le styrène, le diéthylbenzène, l'éthylbenzène, les éthers de glycol et leurs mélanges.

Le plastifiant polymérisable peut notamment être un composé constitué d'une chaîne hydrocarbonée dont une seule extrémité porte plus d'une fonction isocyanate, ladite chaîne hydrocarbonée comprenant et/ou étant substituée par un cycle aromatique et/ou un cycle aliphatique et/ou ladite chaîne hydrocarbonée est substituée par au moins deux chaînes hydrocarbonées pouvant comporter une insaturation, et le nombre de fonctions isocyanates étant strictement supérieur à 1, de préférence supérieur à 1,2, plus préférentiellement supérieur à 1,5 et inférieur ou égal à 2,2, tel que décrit dans la demande de brevet WO 2013/057429 au nom de Soprema.

La composition de SEL de la présente invention peut notamment être réalisée en mélangeant le liant d'origine végétale et les autres composés à chaud. L'étape de mélange peut notamment être réalisée à une température de 30 à 70°C, en particulier de 40 à 60°C.

Le SEL peut notamment être réalisé en étalant la composition de SEL directement sur la surface à revêtir. Le revêtement se solidifie par évaporation du solvant et par réticulation. L'application peut notamment être réalisée à température ambiante.

### Composition de revêtement en enrobés bitumineux

La composition de revêtement en enrobés bitumineux selon la présente invention, comprend, outre le liant d'origine végétale décrit ci-dessus, un polymère ainsi qu'une charge et/ou des granulats, et éventuellement un additif.

La composition de revêtement en enrobés bitumineux selon la présente invention peut notamment comprendre :
- de 1 à 15 %, en particulier de 2 à 12%, plus particulièrement de 4 à 10%, de liant d'origine végétale selon l'invention ;
- de 0,1 à 1%, en particulier de 0,2 à 0,8%, plus particulièrement 0,4 à 0,6% de polymère ;
- de 80 à 99%, en particulier de 85 à 96%, plus particulièrement 88 à 92%, de charge et/ou de granulats ;
- de 0 à 10%, en particulier de 0,1 à 8%, plus particulièrement de 1 à 5%, d'additif ;
les % étant des % en poids par rapport au poids total de la composition de revêtement en enrobés bitumineux.

La charge pouvant être utilisée dans la composition de revêtement en enrobés bitumineux selon l'invention est telle que définie ci-dessus.

Selon un mode de réalisation particulier, les granulats entrant dans la composition de revêtement en enrobés bitumineux de la présente invention sont choisis parmi du sable ; des poussières ; des graviers et/ou des cailloux issus de roches calcaires, de grès, de quartzite, de gneiss, de granite, de gabbro, de basalte, d'andésite ; des granulats de recyclage provenant du concassage de roches issues du recyclage de bétons et de pierres de taille résultant de la démolition de bâtiments ou de chaussées ; des sous-produits de l'industrie ; et leurs mélanges.

La composition de revêtement en enrobés bitumineux de la présente invention peut éventuellement comprendre un additif tel que décrit ci-dessus.

La composition de revêtement en enrobés bitumineux de la présente invention peut notamment être réalisée en mélangeant le liant d'origine végétale, le polymère ainsi que la charge et/ou les granulats à chaud. L'étape de mélange peut notamment être réalisée à une température de 70 à 180°C, en particulier de 100 à 150°C.

Selon un mode de réalisation particulier, la composition de revêtement en enrobés bitumineux de la présente invention comprend moins de 10%, de préférence moins de 5%, plus préférentiellement moins de 1% en poids de bitume d'origine pétrolière par rapport au poids de la composition.

Le revêtement en enrobés bitumineux peut notamment être obtenu en chauffant la composition de revêtement en enrobés bitumineux selon l'invention, en l'étalant sur la surface à revêtir puis en compactant la couche par pression et vibration. Le revêtement se solidifie lorsque la température redescend à la température ambiante. La température d'application peut notamment être de 100 à 250°C, en particulier de 150 et 200°C.

### Composition de revêtement en asphalte

La composition de revêtement en asphalte selon la présente invention, comprend, outre le liant d'origine végétale décrit ci-dessus, un polymère ainsi qu'une charge et/ou des granulats, et éventuellement un additif.

La composition de revêtement en asphalte selon la présente invention peut notamment comprendre :
- de 1 à 15%, en particulier de 4 à 12%, plus particulièrement de 6 à 10%, de liant d'origine végétale selon l'invention ;
- de 0,1 à 1%, en particulier de 0,2 à 0,8%, plus particulièrement 0,4 à 0,6% de polymère ;
- de 85 à 95%, en particulier de 88 à 93%, plus particulièrement 90 à 92%, de charge et/ou des granulats ;
- de 0 à 10%, en particulier de 0,1 à 8%, plus particulièrement de 1 à 5%, d'additif ;
les % étant des % en poids par rapport au poids total de la composition de revêtement en asphalte.

Le polymère et les charges minérales et organiques pouvant être utilisés dans la composition de revêtement en asphalte selon l'invention sont tels que définis ci-dessus.

La composition de revêtement en asphalte de la présente invention peut éventuellement comprendre un additif tel que décrit ci-dessus.

La composition de revêtement en asphalte de la présente invention peut notamment être réalisée en mélangeant tous les composants à chaud. L'étape de mélange peut notamment être réalisée à une température de 120 à 250°C, en particulier de 140 à 180°C.

Selon un mode de réalisation particulier, la composition de revêtement en asphalte de la présente invention comprend moins de 10%, de préférence moins de 5%, plus préférentiellement moins de 1% en poids de bitume d'origine pétrolière par rapport au poids de la composition.

Le revêtement en asphalte peut notamment être obtenu en chauffant la composition de revêtement en asphalte selon l'invention et en la coulant sur la surface à revêtir. Le revêtement se solidifie lorsque la température redescend à la température ambiante. La température d'application peut notamment être de 120 à 250°C, en particulier de 140 et 180°C.

### Composition de primaire, de vernis, de mastic ou de colle

La composition de primaire, de vernis, de mastic ou de colle selon la présente invention, comprend, outre le liant d'origine végétale décrit ci-dessus, du solvant, un additif, éventuellement un polymère et éventuellement une charge.

La composition de primaire, de vernis, de mastic ou de colle selon la présente invention peut notamment comprendre :
- de 20 à 55%, en particulier de 25 à 50%, plus particulièrement de 30 à 45% de liant d'origine végétale selon l'invention ;
- de 10 à 70%, en particulier de 20 à 60%, plus particulièrement de 30 à 50% de solvant ;
- de 0,1% à 6%, en particulier de 0,5 à 4%, plus particulièrement de 1 à 2% d'additif ;
- de 0 à 15%, en particulier de 1 à 12%, plus particulièrement de 2 à 8% de polymère ;
- de 0 à 40% en particulier de 10 à 30%, plus particulièrement de 20 à 25% de charge ;
les % étant des % en poids par rapport au poids total de la composition de primaire, de vernis, de mastic ou de colle.

Le solvant, l'additif, le polymère éventuel et la charge éventuelle pouvant être utilisés dans la composition de primaire, de vernis, de mastic ou de colle selon l'invention sont tels que définis ci-dessus.

La composition de primaire, de vernis, de mastic ou de colle de la présente invention peut notamment être réalisée en mélangeant le liant d'origine végétale et les autres composés à chaud. L'étape de mélange peut notamment être réalisée à une température de 30 à 120°C, en particulier de 40 à 80°C.

Selon un mode de réalisation particulier, la composition de primaire, de vernis, de mastic ou de colle de la présente invention comprend moins de 10%, de préférence moins de 5%, plus préférentiellement moins de 1% en poids de bitume d'origine pétrolière par rapport au poids de la composition.

Le primaire, le vernis, le mastic ou la colle sont appliqués sur les surfaces puis et se solidifient par évaporation du solvant. La température d'application peut notamment être de 5 à 40°C, en particulier de 10 à 25°C.

### Composition d'émulsion de liant

La composition d'émulsion de liant selon la présente invention, comprend, outre le liant d'origine végétale décrit ci-dessus, un tensioactif, un polymère, de l'eau et éventuellement un additif. Le liant d'origine végétale est ainsi dispersé au sein de la phase aqueuse sous la forme de gouttelettes grâce au tensioactif.

La composition d'émulsion de liant selon la présente invention peut notamment comprendre :
- de 20 à 70%, en particulier de 30 à 50%, plus particulièrement 35 à 45% de liant d'origine végétale selon l'invention ;
- de 1 à 10%, en particulier de 2 à 8%, plus particulièrement de 3 à 5% de tensioactif ;
- de 1 à 10%, en particulier de 2 à 8%, plus particulièrement 2 à 5% de polymère ;
- de 30 à 60%, en particulier de 35 à 55%, plus particulièrement de 40 à 50% d'eau ;
- de 0 à 10%, en particulier de 0,1 à 8%, plus particulièrement de 1 à 5%, d'additif ;
les % étant des % en poids par rapport au poids total de la composition d'émulsion de liant.

Selon un mode de réalisation particulier, le tensioactif entrant dans la composition d'émulsion de liant de la présente invention est un tensioactif anionique, cationique ou non-ionique. Le tensioactif peut notamment être un ammonium quaternaire comprenant une chaine grasse.

Le polymère peut notamment être tel que défini ci-dessus.

La composition d'émulsion de liant de la présente invention peut éventuellement comprendre un additif qui peut notamment être choisi parmi un composé antigel, un dope d'adhésivité, un composé anti-mousse, un épaississant, un pigment, et leurs mélanges.

Selon un mode de réalisation particulier, la composition d'émulsion de liant de la présente invention comprend moins de 10%, de préférence moins de 5%, plus préférentiellement moins de 1% en poids de bitume d'origine pétrolière par rapport au poids de la composition.

La composition d'émulsion de liant de la présente invention peut notamment être réalisée en mélangeant la phase aqueuse et la phase liant d'origine végétale. La phase aqueuse est portée à une température de 20-50°C et mélangée à la phase liant portée une température de 100-200°C à l'aide d'un émulsifieur (outil de mélange).

La composition d'émulsion de liant peut notamment être utilisée pour faire un primaire d'accrochage ou un revêtement routier. Pour obtenir le revêtement routier, on peut notamment chauffer la composition d'émulsion de liant et la déverser sur une couche de granulats tels que décrits ci-dessus disposés sur la route à revêtir. Au contact des granulats, l'émulsion est déstabilisée, le liant recouvre les granulats et l'eau s'évacue progressivement par évaporation. La température d'application de l'émulsion de liant peut notamment aller de 70 à 100°C, en particulier de 80 à 90°C.

### Méthode pour diminuer la quantité de bitume d'origine pétrolière

La présente invention a également pour objet une méthode pour diminuer la quantité de bitume d'origine pétrolière dans une composition de membrane d'étanchéité, de membrane insonorisante, de système d'étanchéité liquide, de revêtement en enrobés bitumineux, de revêtement en asphalte, de primaire, de vernis, de mastic, de colle ou d'émulsion de liant telle que décrite précédemment. Cette méthode comprend l'ajout du liant d'origine végétale selon l'invention à ladite composition en remplacement d'une partie ou de la totalité du bitume d'origine pétrolière classiquement utilisé.

La méthode selon l'invention permet d'abaisser la teneur en bitume d'origine pétrolière dans ladite composition en dessous de 10%, de préférence en dessous de 5% et plus préférentiellement encore en dessous de 1%. Dans un mode de réalisation préféré, elle permet de supprimer la totalité du bitume d'origine pétrolière.

L'invention va être décrite plus en détails à l'aide des exemples suivants qui sont donnés à titre purement illustratif.

### EXEMPLES

Dans la description et les exemples ci-dessous, les méthodes suivantes ont été utilisées.

### Température de Bille anneau (TBA) ou température de ramollissement

La TBA (ou température de ramollissement) est mesurée selon la norme NF EN 1427, Juin 2007. Le matériau à tester est placé dans des anneaux en cuivre. Les anneaux sont placés dans un TBAmètre. Une bille métallique est placée en surface des anneaux qui sont chauffés jusqu'à ce que la bille passe au travers de l'anneau. La température à laquelle la bille passe au travers est la TBA.

### Pénétrabilité à l'aiguille à 25°C (Pénétrabilité)

La pénétrabilité est mesurée selon la norme NF EN 1426, Décembre 1999. Le matériau à tester est stocké à 25°C et on mesure avec un pénétromètre à aiguille la pénétration dans l'échantillon, au bout d'un temps de 5 secondes, d'une aiguille de diamètre à la pointe de 0,14 à 0,16 mm dont le poids avec son support est de 100 g. La pénétrabilité est exprimée en dixièmes de mm.

### Pliabilité ou souplesse à froid

La pliabilité est mesurée selon la norme NF EN 1109, 1999. On forme une éprouvette présentant une épaisseur de 2 mm avec un tire-film. On détermine la susceptibilité à la fissuration de l'éprouvette sous l'effet d'un pliage à des températures basses. On recherche ainsi la température la plus basse à laquelle l'éprouvette peut être pliée autour d'un mandrin de diamètre de 30 mm.

### Allongement élastique ou rémanence

Il s'agit de l'aptitude d'un matériau à retrouver sa dimension initiale après avoir subi une élongation suivie d'une relaxation. La rémanence est la déformation résiduelle après relaxation. On forme une éprouvette présentant une épaisseur de 2 mm avec un tire-film. Ladite éprouvette est soumise à une élongation donnée durant 24 h. L'éprouvette est ensuite placée sur un support anti adhérent pendant 24 h.

Pour un mélange n'ayant subi aucune étape de vieillissement, l'élongation est fixée à 200% pendant 24 h. Pour un mélange ayant subi un vieillissement accéléré pendant 6 mois à 70°C, l'élongation est fixée à 25% pendant 24 h.

### Prise en eau

La prise en eau est mesurée de la façon suivante. On forme une éprouvette présentant une épaisseur de 2 mm avec un tire-film. Ladite éprouvette est immergée dans de l'eau. Régulièrement, par exemple toutes les 2 semaines, on sort l'éprouvette de l'eau, on la sèche et on la pèse. On compare le poids initial avant immersion et après immersion. L'écart de masse est attribué à une prise en eau de l'éprouvette. L'éprouvette est replacée dans l'eau et ce test est reproduit jusqu'à stabilisation de la masse de l'éprouvette immergée. Ce test est réalisé à température ambiante.

Dans les exemples ci-dessous, les produits commerciaux et acronymes suivants ont été utilisés :
**Résinoline DP1202:** ester de triéthylène glycol de poix de tall-oil ayant une acidité résiduelle correspondant à un indice d'acide de 10 mg de KOH par gramme de produit et disponible auprès de la société DRT.
**Résinoline DP1204:** ester de terpinéol et de diéthylèneglycol de poix de tall-oil ayant une acidité résiduelle correspondant à un indice d'acide de 10 mg de KOH par gramme de produit et disponible auprès de la société DRT.
**Dertophène DP1104:** résine végétale modifiée de type terpène phénolique, ladite résine ayant une température de ramollissement de 140°C, une acidité résiduelle correspondant à un indice d'acide inférieur à 1 mg de KOH par gramme de produit et disponible auprès de la société DRT.
**Granolite DP 1105 :** résine végétale modifiée de type ester de colophane fortifiée comprenant de la colophane fortifiée modifiée par réaction d'estérification avec le pentaérythritol, ladite résine ayant une température de ramollissement de 140°C, une acidité résiduelle correspondant à un indice d'acide de 45 mg de KOH par gramme de produit et disponible auprès de la société DRT.
**Radia 7396** : huile polyester saturée commercialisée par la société OLEON.
**Radia 7380 :** huile polyester saturée à base de triisostéarate de triméthylolpropane commercialisée par la société OLEON.
**Kraton® 1186 ou T161B :** copolymères à blocs styrène-butadiène-styrène commercialisés respectivement par la société KRATON ou VERSALIS.
**BL200 :** carbonate de calcium ayant une granulométrie comprise entre 8 et 200 micromètres.

### Exemple 1 : Liant d'origine végétale selon l'invention

Dans un mélangeur, on introduit de la poix de tall-oil modifiée, de la résine végétale modifiée et éventuellement de l'huile dans les proportions indiquées en pourcentage en poids par rapport au poids du liant dans le tableau 1 ci-dessous. Le mélange est chauffé à 170°C pendant 30 minutes.

**Tableau 1**

| | **Poix de tall-oil modifiée (%)** | **Huile (%)** | **Résine végétale modifiée (%)** |
|---|---|---|---|
| **Liant 1** | Résinoline DP1202 (75%) | - | Dertophène DP1104 (25%) |
| **Liant 2** | Résinoline DP1202 (75%) | - | Granolite DP1105 (25%) |
| **Liant 3** | Résinoline DP1202 (50%) | Radia 7396 (25%) | Dertophène DP1104 (25%) |
| **Liant 4** | Résinoline DP1202 (50%) | Radia 7396 (25%) | Granolite DP1105 (25%) |
| **Liant 5** | Résinoline DP1202 (50%) | Radia 7380 (25%) | Dertophène DP1104 (25%) |
| **Liant 6** | Résinoline DP1204 (75%) | - | Dertophène DP1104 (25%) |

Le tableau 2 ci-dessous donne la température de Bille anneau (TBA), la pénétrabilité à l'aiguille à 25°C (pénétrabilité) des liants 1 et 2 selon l'invention et d'un bitume d'origine pétrolière de grade 160-220.

**Tableau 2**

| | **Liant 1** | **Liant 2** | **Bitume d'origine pétrolière de grade 160- 220 (comparatif)** |
|---|---|---|---|
| TBA (°C) | 39 | 38 | 35-43 |
| Pénétrabilité à 25°c (1/10 de mm) | 158 | 153 | 160-220 |

Le liant 1 et le liant 2 présentent un comportement similaire à un bitume d'origine pétrolière de grade compris entre 70-100 et 160-220. En effet, ces trois compositions présentent une TBA et une pénétrabilité à l'aiguille à 25°C similaires. Les viscosités du liant 1 et du liant 2 sont satisfaisantes pour les applications envisagées.

### Exemple 2 : Composition de membrane d'étanchéité comprenant le liant d'origine végétale selon l'invention

Dans un mélangeur, on introduit un liant préparé à l'exemple 1, un polymère et une charge dans les proportions indiquées en pourcentage en poids par rapport au poids de la composition dans le tableau 3 ci-dessous. Le mélange est chauffé à 170°C pendant 60 minutes.

**Tableau 3**

| | **Composition 1** | **Composition 2** | **Composition 3** |
|---|---|---|---|
| Liant (%) | Liant 1 (56%) | Liant 5 (56%) | Liant 6 (56%) |
| Polymère (%) | Kraton 1186 (14%) | Kraton 1186 (14%) | T161B (14%) |
| Charge (%) | BL200 (30%) | BL200 (30%) | BL200 (30%) |

Le tableau 4 ci-dessous donne les mesures de TBA, de pénétrabilité, de pliabilité, d'allongement rémanent et de prise en eau des compositions 1 et 3.

**Tableau 4**

| | **Composition 1** | **Composition 3** | **Spécifications** |
|---|---|---|---|
| TBA (°C) | 130 | 131 | 120 |
| pénétrabilité 25°C (1/10 de mm) | 30 | 30 | 20-60 |
| pliabilité (°C) | < -35 | < -35 | < -20 |
| allongement rémanent à 200% (%) | 7 | 7 | < 10 |
| prise en eau après 35 jours d'immersion (%) | 1,75 | Non déterminé | < 2% |

D'après le tableau 5 ci-dessous, ces compositions présentent également de très bonnes performances après vieillissement EN (24 semaines à 70°C) selon la norme NF EN 1296.

**Tableau 5**

| | **Composition 1 après vieillissement** | **Composition 3 après vieillissement** | **Spécifications** |
|---|---|---|---|
| TBA (°C) | 120 | 119 | 100 |
| pliabilité (°C) | < -15 | < -15 | < -5 |
| allongement rémanent à 25% (%) | 7 | 7 | <10 |

## Revendications

1. Liant d'origine végétale **caractérisé en ce qu'**il comprend :
- 65 à 85% d'une fraction plastifiante comprenant une poix de tall-oil modifiée ;
- 15 à 35% d'une fraction structurante comprenant une résine végétale modifiée ;
les % étant des % en poids par rapport au poids du liant.

2. Liant selon la revendication 1, **caractérisé en ce que** la poix de tall-oil modifiée est obtenue par estérification de poix de tall-oil avec un alcool, un polyol ou un mélange de ceux-ci, ou par décarboxylation thermique de poix de tall-oil.

3. Liant selon la revendication 1 ou 2, **caractérisé en ce que** la poix de tall-oil modifiée présente une acidité résiduelle inférieure à 40 milligrammes de KOH par gramme de poix de tall-oil modifiée.

4. Liant selon l'une quelconque des revendications 1 à 3, **caractérisé en ce que** la résine végétale modifiée est une résine terpène phénolique ou un ester de colophane fortifiée.

5. Liant selon l'une quelconque des revendications 1 à 4, **caractérisé en ce que** la résine végétale modifiée présente une température de ramollissement, mesurée selon la norme NF EN 1427, Juin 2007, supérieure à 120°C.

6. Liant selon l'une quelconque des revendications 1 à 5, **caractérisé en ce que** la résine végétale modifiée présente une acidité résiduelle inférieure à 80 milligrammes de KOH par gramme de résine végétale modifiée.

7. Liant selon l'une quelconque des revendications 1 à 4, **caractérisé en ce qu'**il présente une température de Bille anneau, mesurée selon la norme NF EN 1427, Juin 2007, de 30 à 58°C.

8. Liant selon l'une quelconque des revendications 1 à 5, **caractérisé en ce qu'**il présente une pénétrabilité à l'aiguille à 25°C, mesurée selon la norme NF EN 1426, Décembre 1999, de 30 à 300 dixièmes de mm.

9. Liant selon l'une quelconque des revendications 1 à 5, **caractérisé en ce que** la fraction plastifiante comprend en outre une huile.

10. Composition de membrane d'étanchéité **caractérisée en ce qu'**elle comprend :
- le liant d'origine végétale selon l'une quelconque des revendications 1 à 9 ;
- un polymère ;
- une charge ;
- éventuellement un additif.

11. Composition de membrane insonorisante **caractérisée en ce qu'**elle comprend :
- le liant d'origine végétale selon l'une quelconque des revendications 1 à 9 ;
- une charge ;
- éventuellement un polymère ;
- éventuellement un additif.

12. Composition de système d'étanchéité liquide **caractérisée en ce qu'**elle comprend :
- le liant d'origine végétale selon l'une quelconque des revendications 1 à 9 ;
- un solvant ou plastifiant polymérisable;
- un additif ;
- un prépolymère ;
- éventuellement une charge.

13. Composition de revêtement en enrobés bitumineux ou composition de revêtement en asphalte **caractérisée en ce qu'**elle comprend :
- le liant d'origine végétale selon l'une quelconque des revendications 1 à 9 ;
- un polymère
- une charge et/ou des granulats
- éventuellement un additif.

14. Composition de primaire, de vernis, de mastic ou de colle **caractérisée en ce qu'**elle comprend :
- le liant d'origine végétale selon l'une quelconque des revendications 1 à 9 ;
- du solvant ;
- un additif ;
- éventuellement un polymère ;
- éventuellement une charge.

15. Composition d'émulsion de liant **caractérisée en ce qu'**elle comprend :
- le liant d'origine végétale selon l'une quelconque des revendications 1 à 9 ;
- un tensioactif ;
- un polymère ;
- de l'eau ;
- éventuellement un additif.

16. Méthode pour diminuer la quantité de bitume d'origine pétrolière dans une composition de membrane d'étanchéité telle que décrite à la revendication 10 ou dans une composition de membrane insonorisante telle que décrite à la revendication 11 ou dans une composition de système d'étanchéité liquide telle que décrite à la revendication 12 ou dans une composition de revêtement en enrobés bitumineux ou de revêtement en asphalte telle que décrite à la revendication 13 ou dans une composition de primaire, de vernis, de mastic ou de colle telle que décrite à la revendication 14 ou dans une composition d'émulsion de liant telle que décrite à la revendication 15, ladite méthode comprenant l'ajout d'un liant d'origine végétale selon l'une quelconque des revendications 1 à 9 à ladite composition en remplacement d'une partie ou de la totalité du bitume d'origine pétrolière.

## Patentansprüche

1. Bindemittel pflanzlichen Ursprungs, **dadurch gekennzeichnet, dass** es umfasst:
- 65 bis 85% einer weichmachenden Fraktion, die ein modifiziertes Tallölpech umfasst;
- 15 bis 35% einer strukturierenden Fraktion, die ein modifiziertes Pflanzenharz umfasst,
wobei die %-Angaben Gewichts-%, bezogen auf das Gewicht des Bindemittels, sind.

2. Bindemittel nach Anspruch 1, **dadurch gekennzeichnet, dass** das modifizierte Tallölpech durch Veresterung von Tallölpech mit einem Alkohol, einem Polyol oder einer Mischung davon oder durch thermische Decarboxylierung von Tallölpech erhalten wird.

3. Bindemittel nach Anspruch 1 oder 2, **dadurch gekennzeichnet, dass** das modifizierte Tallölpech eine Restacidität von weniger als 40 Milligramm KOH pro Gramm modifiziertes Tallölpech aufweist.

4. Bindemittel nach einem der Ansprüche 1 bis 3, **dadurch gekennzeichnet, dass** das modifizierte Pflanzenharz ein phenolisches Terpenharz oder ein verstärkter Kolophoniumester ist.

5. Bindemittel nach einem der Ansprüche 1 bis 4, **dadurch gekennzeichnet, dass** das modifizierte Pflanzenharz eine Erweichungstemperatur, gemessen gemäß der Norm NF EN 1427, Juni 2007, von mehr als 120°C aufweist.

6. Bindemittel nach einem der Ansprüche 1 bis 5, **dadurch gekennzeichnet, dass** das modifizierte Pflanzenharz ein Restacidität von weniger als 80 Milligramm KOH pro Gramm modifiziertes Pflanzenharz aufweist.

7. Bindemittel nach einem der Ansprüche 1 bis 4, **dadurch gekennzeichnet, dass** es eine Ring-Kugel-Temperatur, gemessen gemäß der Norm NF EN 1427, Juni 2007, von 30 bis 58° C aufweist.

8. Bindemittel nach einem der Ansprüche 1 bis 5, **dadurch gekennzeichnet, dass** es eine Nadelpenetration bei 25° C, gemessen gemäß der Norm NF EN 1426, Dezember 1999, von 30 bis 300 Zehntel-mm aufweist.

9. Bindemittel nach einem der Ansprüche 1 bis 5, **dadurch gekennzeichnet, dass** die weichmachende Fraktion weiterhin ein Öl umfasst.

10. Dichtungsmembranzusammensetzung, **dadurch gekennzeichnet, dass** sie umfasst:
- das Bindemittel pflanzlichen Ursprungs nach einem der Ansprüche 1 bis 9;
- ein Polymer;
- eine Ladung;
- gegebenenfalls einen Zusatzstoff.

11. Schalldämmende Membranzusammensetzung, **dadurch gekennzeichnet, dass** sie umfasst:
- das Bindemittel pflanzlichen Ursprungs nach einem der Ansprüche 1 bis 9;
- eine Ladung;
- gegebenenfalls ein Polymer;
- gegebenenfalls einen Zusatzstoff.

12. Flüssige Dichtungssystemzusammensetzung, **dadurch gekennzeichnet, dass** sie umfasst:
- das Bindemittel pflanzlichen Ursprungs nach einem der Ansprüche 1 bis 9;
- ein polymerisierbares Lösungsmittel oder ein polymerisierbarer Weichmacher;
- einen Zusatzstoff;
- ein Präpolymer;
- gegebenenfalls eine Ladung.

13. Bituminöse Mischgut-Beschichtungszusammensetzung oder Asphaltbeschichtungszusammensetzung, **dadurch gekennzeichnet, dass** sie umfasst:
- das Bindemittel pflanzlichen Ursprungs nach einem der Ansprüche 1 bis 9;
- ein Polymer;
- eine Ladung und/oder Granulat;
- gegebenenfalls einen Zusatzstoff.

14. Grundierungs-, Lack-, Kitt- oder Klebstoff-Zusammensetzung, **dadurch gekennzeichnet, dass** sie umfasst:
- das Bindemittel pflanzlichen Ursprungs nach einem der Ansprüche 1 bis 9;
- Lösungsmittel;
- einen Zusatzstoff;
- gegebenenfalls ein Polymer;
- gegebenenfalls eine Ladung.

15. Bindemittelemulsionszusammensetzung, **dadurch gekennzeichnet, dass** sie umfasst:
- das Bindemittel pflanzlichen Ursprungs nach einem der Ansprüche 1 bis 9;
- ein Tensid;
- ein Polymer;
- Wasser;
- gegebenenfalls einen Zusatzstoff.

16. Verfahren zum Verringern der Menge an aus Erdöl stammendem Bitumen in einer Dichtungsmembranzusammensetzung wie in Anspruch 10 beschrieben, oder in einer schallisolierenden Membranzusammensetzung wie in Anspruch 11 beschrieben, oder in einer flüssigen Dichtungssystemzusammensetzung wie in Anspruch 12 beschrieben, oder in einer bituminösen Mischgut-Beschichtungszusammensetzung oder Asphaltbeschichtungszusammensetzung wie in Anspruch 13 beschrieben, oder in einer Grundierungs-, Lack-, Kitt- oder Klebstoff-Zusammensetzung wie in Anspruch 14 beschrieben, oder in einer Bindemittelemulsionszusammensetzung wie in Anspruch 15 beschrieben,
wobei das Verfahren die Zugabe eines Bindemittels pflanzlichen Ursprungs gemäß einem der Ansprüche 1 bis 9 zu der Zusammensetzung umfasst, als Ersatz für einen Teil oder das gesamte aus Erdöl stammende Bitumen.

## Claims

1. Binder of vegetable origin **characterized in that** it comprises:
- 65% to 85% of a plasticizing fraction comprising a modified tall-oil pitch;
- 15% to 35% of a structuring fraction comprising a modified vegetable resin;
the % being % by weight relative to the weight of the binder.

2. Binder according to claim 1, **characterized in that** the modified tall-oil pitch is obtained by esterification of tall-oil pitch with an alcohol, a polyol or a mixture thereof, or by thermal decarboxylation of tall-oil pitch.

3. Binder according to claim 1 or 2, **characterized in that** the modified tall-oil pitch has a residual acidity of less than 40 milligrams of KOH per gram of modified tall-oil pitch.

4. Binder according to any one of claims 1 to 3, **characterized in that** the modified vegetable resin is a phenolic terpene resin or a fortified-rosin ester.

5. Binder according to any one of claims 1 to 4, **characterized in that** the modified vegetable resin has a softening point above 120°C, as measured according to standard NF EN 1427, June 2007.

6. Binder according to any one of claims 1 to 5, **characterized in that** the modified vegetable resin has a residual acidity of less than 80 milligrams of KOH per gram of modified vegetable resin.

7. Binder according to any one of claims 1 to 4, **characterized in that** said binder has a ring- and-ball temperature of from 30 to 58°C, as measured according to standard NF EN 1427, June 2007.

8. Binder according to any one of claims 1 to 5, **characterized in that** said binder has a needle penetrability at 25°C of from 30 to 300 tenths of one mm, as measured according to standard NF EN 1426, December 1999.

9. Binder according to any one of claims 1 to 5, **characterized in that** the plasticizing fraction further comprises an oil.

10. Leakproofing membrane composition **characterized in that** it comprises:
- the binder of vegetable origin according to any one of claims 1 to 9;
- a polymer;
- a filler;
- optionally an additive.

11. Soundproofing membrane composition **characterized in that** it comprises:
- the binder of vegetable origin according to any one of claims 1 to 9;
- a filler;
- optionally a polymer;
- optionally an additive.

12. Liquid sealing system composition **characterized in that** it comprises:
- the binder of vegetable origin according to any one of claims 1 to 9;
- a solvent or polymerizable plasticizer;
- an additive;
- a prepolymer;
- optionally a filler.

13. Asphalt mix coating composition or asphalt coating composition **characterized in that** it comprises:
- the binder of vegetable origin according to any one of claims 1 to 9;
- a polymer;
- a filler and/or aggregates;
- optionally an additive.

14. Primer, varnish, mastic or adhesive composition **characterized in that** it comprises:
- the binder of vegetable origin according to any one of claims 1 to 9;
- solvent;
- an additive;
- optionally a polymer;
- optionally a filler.

15. Binder emulsion composition **characterized in that** it comprises:
- the binder of vegetable origin according to any one of claims 1 to 9;
- a surfactant;
- a polymer;
- water;
- optionally an additive.

16. Method for reducing the amount of bitumen of petroleum origin in a leakproofing membrane composition as described in Claim 10 or in a soundproofing membrane composition as described in Claim 11 or in a liquid sealing system composition as described in Claim 12 or in an asphalt mix coating composition or asphalt coating composition as described in Claim 13 or in a primer, varnish, mastic or adhesive composition as described in Claim 14 or in a binder emulsion composition as described in Claim 15, said method comprising the addition of a binder of vegetable origin according to any one of claims 1 to 9 to said composition as a replacement for a part or all of the bitumen of petroleum origin.
